# EUROPEAN PATENT APPLICATION

(11) **EP 4 597 982 A1**
(43) Date of publication of application: **06.08.2025**
(21) Application number: 24154689.4
(22) Date of filing: 30.01.2024
(51) Int. Cl.: H04L 61/5038, B60H 1/00, B60H 1/32, H04L 101/627

(54) **METHODS AND SYSTEMS FOR INITIALIZING A REFRIGERATION SYSTEM**

(71) Applicant: Thermo King LLC, Minneapolis, MN 55420 (US)
(72) Inventor: Smyth, Ciaran, Galway (IE)
(74) Representative: Haseltine Lake Kempner LLP

(57) **Abstract**

The present disclosure relates to a method 300 comprising performing, by a controller 490 of a refrigeration system 20, an initialization procedure 310 including executing an initialization process 330. The initialization process 330 comprises: providing a prompt signal on a dedicated channel 462; monitoring a CAN bus 470 for a response signal from at least one remote device 480A-1, 480A-2; and assigning a network address to the at least one remote device 480A-1, 480A-2 if a response signal from the remote device 480A-1, 480A-2 is detected on the CAN bus 470.

## Description

### FIELD OF THE INVENTION

The present disclosure relates to methods and systems for initializing a refrigeration system (e.g., a transport refrigeration system), and in particular to methods and systems for initializing a refrigeration system comprising one or more remote evaporators. The present disclosure also relates to systems comprising means adapted to carry out such methods.

### BACKGROUND OF THE INVENTION

Installation of a refrigeration system within, for example, a vehicle or a building includes the installation of one or more evaporators. The evaporator(s) may be distal from the other components of the refrigeration system, and for this reason may be referred to as remote evaporator(s). Installation of the one or more evaporators may include placing the evaporator(s) within respective zones and providing electrical wiring between each evaporator and a controller of the refrigeration system. The functionality of the electrical wiring may then need to be manually checked (e.g., verified) as part of the installation of the refrigeration system.

It is desirable to reduce a time taken to complete installation of a refrigeration system. The present invention has been devised with the foregoing in mind.

### SUMMARY OF THE INVENTION

According to a first aspect there is provided a method comprising: performing, by a controller of a refrigeration system, an initialization procedure including executing an initialization process which comprises: providing a prompt signal on a dedicated channel; monitoring a CAN bus for a response signal from at least one remote device; and assigning a network address to the at least one remote device if a response signal from the remote device is detected on the CAN bus.

The initialization process may comprise generating an alert if a response signal from the at least one remote device on the CAN bus is not detected.

The at least one remote device may be associated with an evaporator configured for heat exchange with a climate-controlled zone. The initialization process may comprise: distinguishing between a plurality of remote devices if response signals from a plurality of remote devices are detected on the CAN bus based on a difference between the respective response signals; and assigning a network address to each remote device.

Each of the plurality of remote devices may be associated with a respective evaporator configured for heat exchange with the same climate-controlled zone.

Distinguishing between the plurality of remote devices may include identifying one of the plurality of remote devices as being associated with a primary evaporator of the climate-controlled zone.

It may be that performing the initialization procedure includes executing an additional initialization process after executing the initialization process. The additional initialization process comprises: providing an additional prompt signal on an additional dedicated channel; and monitoring the CAN bus for an additional response signal from at least one additional remote device.

The additional initialization process may comprise: assigning a network address to the at least one additional remote device if an additional response signal from the additional remote device is detected on the CAN bus.

It may be that the at least one additional remote device is associated with an additional evaporator configured for heat exchange with an additional climate controlled space.

The additional initialization process may comprise: distinguishing between a plurality of additional remote devices if additional response signals from a plurality of additional remote devices are detected on the CAN bus based on a difference between the respective additional response signals; and assigning a network address to each additional remote device.

Each additional remote device may be associated with a respective additional evaporator configured for heat exchange with the same additional climate controlled space. Distinguishing between the plurality of additional remote devices may include identifying one of the plurality of additional remote devices as being associated with a primary additional evaporator of the additional climate controlled space.

The additional initialization process may comprise: terminating performance of the initialization procedure if an additional response signal from an additional remote device is not detected on the CAN bus.

It may be that the method comprises: performing, by the controller of the refrigeration system, a run procedure if at least one network address has been assigned during the initialization procedure, the run procedure including controlling the refrigeration system using the at least one network address.

According to a second aspect there is provided a computer program comprising instructions which, when the program is executed by a processor, cause the processor to carry out a method in accordance with the first aspect.

According to a third aspect there is provided a computer-readable medium having stored thereon a computer program in accordance with the second aspect.

According to a fourth aspect there is provided a refrigeration system comprising a controller configured to carry out a method in accordance with the first aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising a vapour-compression refrigeration circuit;
**FIG. 3** is a diagram which shows an example electronic system suitable for use with the transport refrigeration unit of FIG. 2;
**FIG. 4** is a flowchart which shows an example method of initializing a refrigeration system using the electronic system of FIG. 3;
**FIG. 5** is a flowchart which shows an initialization procedure of the method shown by FIG. 4;
**FIG. 6** is a flowchart which shows an additional initialization procedure of the method shown by FIG. 4; and
**FIG. 7** is a highly schematic diagram of a machine-readable medium.

### DETAILED DESCRIPTION OF THE INVENTION

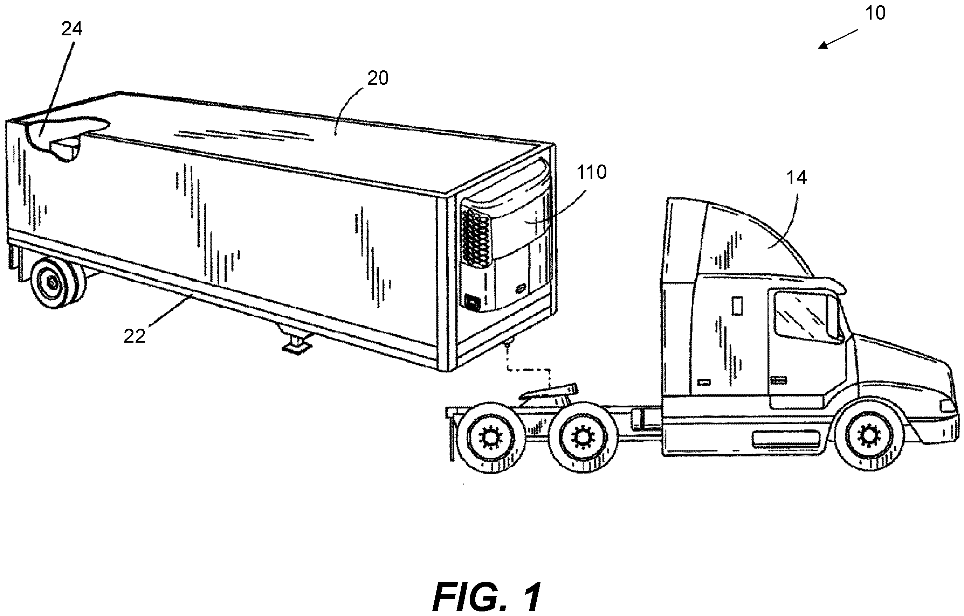

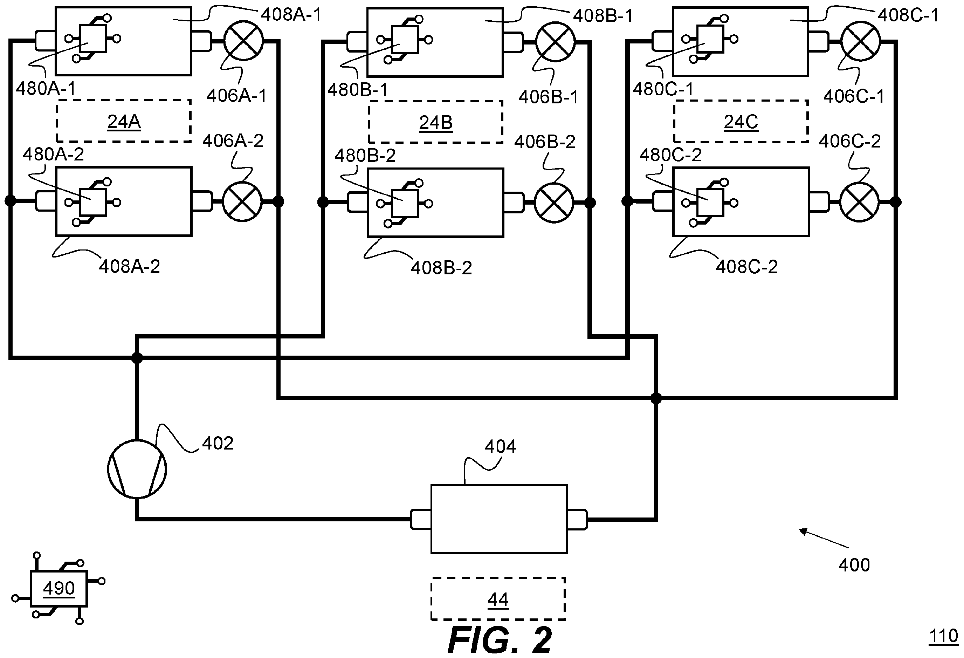

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 has multiple zones (not shown by FIG. 1 but shown by FIG. 2 below) which may be separated from one another (e.g., thermally or hermetically separated). Accordingly, the transport refrigeration system 20 may be operated as a multi-temperature refrigeration system using the multiple zones. The structure 22 includes a chassis. The structure 22 supports the TRU 110. The vehicle 10 further comprises a tractor unit 14 removably couplable to the trailer. Transport refrigeration systems in accordance with the present disclosure may be disposed in and/or on other types of vehicles, such as rigid trucks and the like.

**FIG. 2** schematically shows an example TRU 110 suitable for use within the vehicle 10 and the transport refrigeration system 20 of FIG. 1. The TRU 110 comprises a vapour-compression refrigeration circuit 400.

The vapour-compression refrigeration circuit 400 includes a condenser 404 which is configured to reject heat to a thermal sink 44 (e.g., ambient air outside of the climate-controlled compartment 24). The vapour-compression refrigeration circuit 400 further comprises a plurality of evaporators 408A-1, 408A-2, 408B-1, 408B-2, 408C-1, 408C-2, each of which is configured to receive heat from a climate-controlled zone 24A, 24B, 24C, of the transport refrigeration system 20. For these purposes, the vapour-compression refrigeration circuit 400 also includes a compressor 402 and a plurality of expansion valves 406A-1, 406A-2, 406B-1, 406B-2, 406C-1, 406C-2. Accordingly, the vapour-compression refrigeration circuit 400 may be controlled to cause heat to be removed from the climate-controlled compartment 24 by circulating a refrigerant therein, as will be understood by those skilled in the art.

More specifically, in the example of FIG. 2, the vapour-compression circuit 400 comprises six evaporators 408A-1, 408A-2, 408B-1, 408B-2, 408C-1, 408C-2. A first primary evaporator 408A-1 and a first secondary evaporator 408A-2 (which together form a first pair of evaporators 408A-1, 408A-2) are both configured to receive heat from a first climate-controlled zone 24A of the transport refrigeration system 20. Similarly, a second primary evaporator 408B-1 and a second secondary evaporator 408B-2 (together forming a second pair of evaporators 408B-1, 408B-2) are both configured to receive heat from a second climate-controlled zone 24B of the transport refrigeration system 20 while a third primary evaporator 408C-1 and a third secondary evaporator 408C-2 (together forming a third pair of evaporators 408C-1, 408c-2) are both configured to receive heat from a third climate-controlled zone 24C of the transport refrigeration system 20. The evaporators are generally proximal to the respective climate-controlled zones with which they exchange heat and distal from the compressor 402 and the condenser 404, and are may therefore be referred to as remote evaporators.

Yet more specifically, in the example of FIG. 2, each pair of evaporators is fluidically connected in parallel with respect to the other pairs of evaporators between the compressor 402 and the condenser 404. Additionally, the primary evaporator of each pair of evaporators is fluidically connected in parallel to the secondary evaporator of the pair of evaporators. A respective expansion valve 406A-1, 406A-2, 406B-1, 406B-2, 406C-1, 406C-2, is configured to control a pressure of the refrigerant circulated to each evaporator 408A-1, 408A-2, 408B-1, 408B-2, 408C-1, 408C-2.

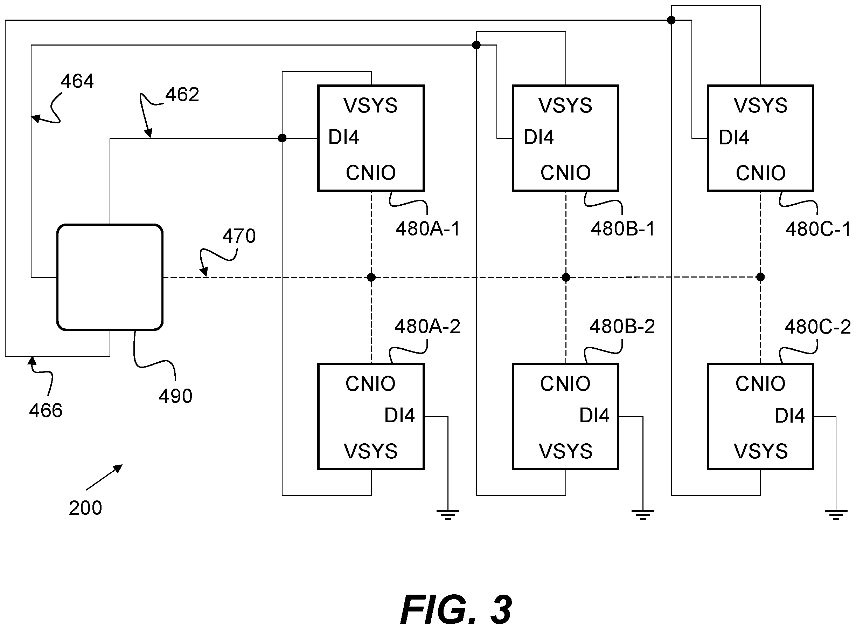

The transport refrigeration system 20 comprises a controller 490 (see also the description of FIG. 3 below) which is configured to control the TRU 110 (including being configured to control the vapour-compression refrigeration circuit 400). The controller 490 may be referred to as a main controller 490 or as a main application controller (MAC) 490. Further, each evaporator 408A-1, 408A-2, 408B-1, 408B-2, 408C-1, 408C-2 is provided with a respective local controller 480A-1, 480A-2, 480B-1, 480B-2, 480C-1, 480C-2. The local controllers may be referred to as remote devices or remote in-out controllers (RIOCs). The RIOC 480A-1 associated with the first primary evaporator 408A-1 and the RIOC 480A-2 associated with the first secondary evaporator 408A-2 together form a first pair of RIOCs 480A-1, 480A-2, the RIOC 480B-1 associated with the second primary evaporator 408B-1 and the RIOC 480B-2 associated with the second secondary evaporator 408B-2 together form a second pair of RIOCs 480B-1, 480B-2, while the RIOC 480C-1 associated with the third primary evaporator 408C-1 and the RIOC 480C-2 associated with the third secondary evaporator 408C-2 together form a third pair of RIOCs 480C-1, 480C-2.

The MAC 490 is electrically, and thereby communicatively, coupled with each of the RIOCs 480A-1, 480A-2, 480B-1, 480B-2, 480B-1, 480B-2, as is described in further detail below with reference to FIG. 3. Each RIOC 480A-1, 480A-2, 480B-1, 480B-2, 480C-1, 480C-2 may be configured to monitor one or more parameters associated with the relevant evaporator 408A-1, 408A-2, 408B-1, 408B-2, 408C-1, 408C-2 and provide the or each parameter to the MAC 490. The MAC 490 may the control the vapour-compression system 400 based on, at least in part, the or each parameter received from the RIOC(s).

**FIG. 3** is a schematic diagram showing an example electronic system 200 suitable for use with the TRU 110 described above with reference to FIG. 2, with like reference signs denoting similar or common features. The electronic system 200 comprises a common controller area network (CAN) bus 470 and a plurality of separate dedicated channels 462, 464, 466. The MAC 490 is electrically coupled to each of the RIOCs 480A-1, 480A-2, 480B-1, 480B-2, 480C-1, 480C-2 by the CAN bus 470. Further, the MAC 490 is electrically coupled: to the first pair of RIOCs 480A-1, 480A-2 by a first dedicated channel 462; to the second pair of RIOCs 480B-1, 480B-2 by a second dedicated channel 464; and to the third pair of RIOCs 480C-1, 480C-2 by a third dedicated channel 466. In this example, each dedicated channel 462, 464, 466 may also, in use, serve as a power connection between the MAC 490 and the RIOC(s) 480A-1, 480A-2, 480B-1, 480B-2, 480C-1, 480C-2. For instance, each dedicated channel 462, 464, 466 may serve as a 24 VDC bus power connection between the MAC 490 and the RIOC(s) 480A-1, 480A-2, 480B-1, 480B-2, 480C-1, 480C-2.

Each RIOC comprises two input ports and an input-output port. The first input port of each RIOC is labelled as "VSYS" in FIG. 3, whereas the second input port of each RIOC is labelled as "DI4" in FIG. 3. The input-output port of each RIOC is labelled as "CNIO" in FIG. 3. It will be appreciated that each RIOC may comprise further ports in addition to those shown by FIG. 3 and described herein. For example, each RIOC may have 32 ports or 48 ports (e.g., if a 32-pin connector or a 48-pin connector as applicable is used for the respective RIOC).

Each RIOC 480A-1, 480A-2, 480B-1, 480B-2, 480C-1, 480C-2 is coupled to the CAN bus 470 via its input-output port CNIO. Each of the first pair of RIOCs 480A-1, 480A-2 is coupled to the first dedicated channel 462 its first input port VSYS. Similarly, each of the second pair of RIOCs 480B-1, 480B-2 is coupled to the second dedicated channel 464 via its first input port VSYS and each of the third pair of RIOCs 480C-1, 480C-2 is coupled to the third dedicated channel 466 via its first input port VSYS.

The second input port DI4 of the RIOC 480A-1, 480B-1, 480C-1, associated with the primary evaporator 408A-1, 408B-1, 408C-1, of each pair of evaporators is also coupled to the dedicated channel 462, 464, 466 to which its first input port is coupled. The second input port DI4 of the RIOC 480A-2, 480B-2, 480C-2, associated with the secondary evaporator 408A-2, 408B-2, 408C-2, of each pair of evaporators is coupled to ground.

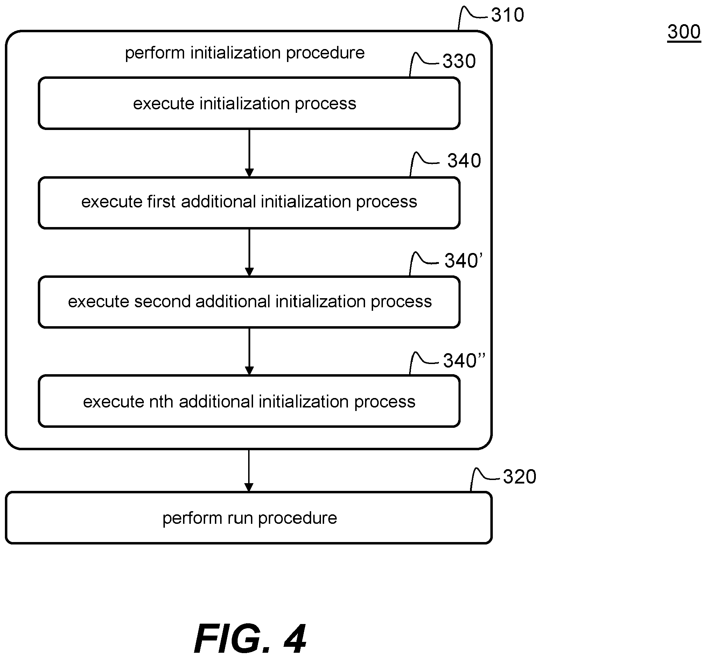

**FIG. 4** is a flowchart showing an example method 300 for initializing a refrigeration system (e.g., the transport refrigeration system 20 described above with reference to FIGs. 1 to 3). The method 300 may be carried out by a controller of the refrigeration system (e.g., the controller 490 of the transport refrigeration system 20 described above with reference to FIG. 1).

The method 300 comprises the controller performing, at block 310, an initialization procedure. Performance, at block 310, of the initialization procedure may be started in response to an installer or a user providing an input to a human-machine interface (HMI) or via an application-program interface (API), such as an HMI or an API to an electronic system which comprises the controller (e.g., the electronic system 200 described above with reference to FIG. 3) or a refrigeration system which comprises the controller (e.g., the controller 490 described above).

Subject to the criterion described below, the method 300 further comprises the controller performing, at block 320, a run procedure. Performance, at block 310, of the initialization procedure includes the controller executing, at block 330, an initialization process. Performance, at block 310, of the initialization procedure may further include the controller executing, at blocks 340, 340', 340", at least one additional initialization process.

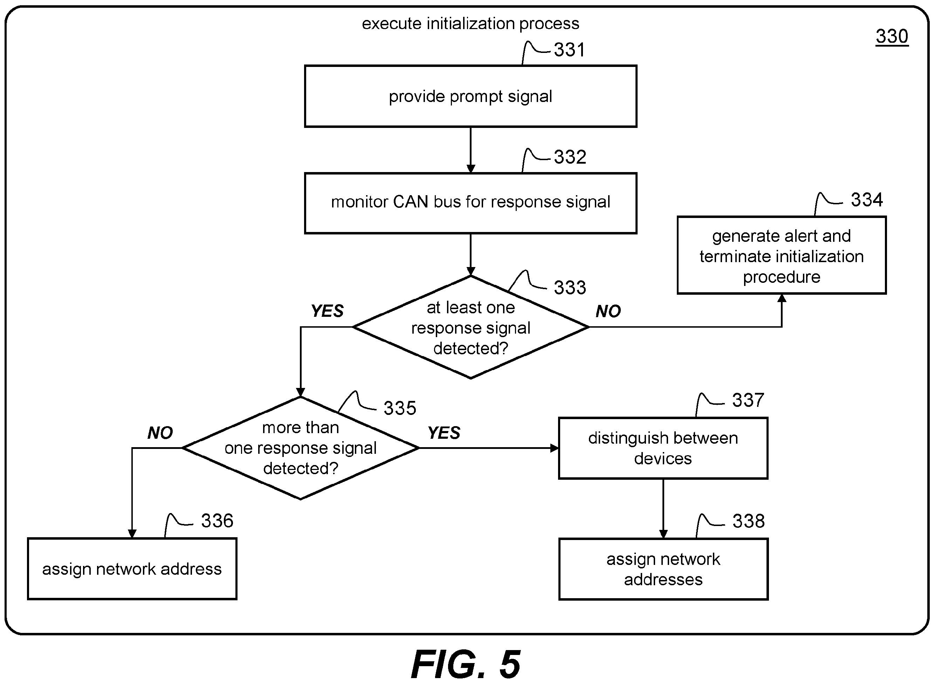

**FIG. 5** is a flowchart which shows the initialization process represented by block 330 within FIG. 4 in detail. The initialization process may commence with a controller (e.g., the MAC 490 described above with reference to FIGs. 2 and 3) issuing a disable command to any components connected to a CAN bus (e.g., the CAN bus 470 described above with regards to FIG. 3) to ensure communicative silence on the CAN bus prior to the substantive actions of the initialization process described below being carried out.

The initialization process comprises providing, at sub-block 331, a prompt signal on a dedicated channel (e.g., the first dedicated channel 462 described above with reference to FIG. 3). The prompt signal may be, for example, a digital output signal (e.g., a DC voltage corresponding to a HIGH digital state). The initialization process also comprises monitoring, at sub-block 332, for one or more response signals on the CAN bus after the prompt signal has been provided on the dedicated channel and then determining, at sub-block 333, whether at least one response signal from a remote device has been detected on the CAN bus. Detection of a response signal on the CAN bus from a remote device is indicative of the remote device(s) (e.g., a RIOC 480A-1, 480A-2 described above with reference to FIG. 3) having received the prompt signal via the dedicated channel at a first input of the remote device (e.g., the first input VSYS described above with reference to FIG. 3) and responding thereto by providing the response signal on the CAN bus. As a result, detection of a response signal on the CAN bus is indicative of the wiring between the remote device and the controller functioning correctly. The response signal may comprise (e.g., encode or represent) a unique identifier associated with the remote device which provides the response signal on the CAN bus. Lack of detection of a response signal on the CAN bus after the prompt signal has been provided on the dedicated channel is indicative of the wiring between the remote device and the controller not functioning correctly. The response signal may comprise an indication of a presence of a signal or an absence of a signal received at a second input of the remote device (e.g., the second input DI4 described above with reference to FIG. 3).

If it is determined, at sub-block 333, that a response signal has not been detected on the CAN bus from a remote device after the prompt signal was provided on the dedicated channel, the method 300 generates, at block 334, an alert and terminates performance of the initialization procedure. The alert may be provided on an HMI or an API of the electronic system or of the refrigeration system. Generation and provision of the alert may prompt the installer or the user to investigate a state of the wiring between the remote device(s) and the controller and take any remedial actions deemed appropriate. The installer or the user may then restart the initialization procedure by providing an input to the HMI or the API as described above.

Conversely, if it is determined, at sub-block 333, that a response signal has been detected on the CAN bus after the prompt signal was provided on the dedicated channel, the method 300 determines, at sub-block 335, whether a plurality of response signals from a corresponding plurality of remote devices have been detected on the CAN bus. By way of example, if response signals comprising different unique identifiers are detected on the CAN bus, the method determines, at sub-block 335, that a plurality of response signals from a corresponding plurality of remote devices have been detected on the CAN bus. Otherwise, the method may determine, at sub-block 335, that a plurality of response signals from a corresponding plurality of remote devices have not been detected on the CAN bus.

If it is determined, at sub-block 335, that a plurality of response signals from a corresponding plurality of remote devices have not been detected on the CAN bus (i.e., that only one response signal has been received on the CAN bus from only one remote device), at sub-block 336, a network address (e.g., source address) is assigned to the remote device which provided the response signal on the CAN bus. The network address may be assigned, at sub-block 336, based on (e.g., using) the SAE J1939 protocol. Sub-block 336 may optionally comprise generating a status message. The status message may be provided on an HMI or an API of the electronic system or of the refrigeration system. In the context of the electronic system 200 described above with reference to FIG. 3, generation and provision of the status message may inform the installer or the user that the climate-controlled zone 24A has been configured as a single-evaporator zone.

If it is determined, at sub-block 335, that a plurality of response signals from a corresponding plurality of remote devices have been detected on the CAN bus, the method 300 distinguishes, at sub-block 337, between the plurality of remote devices. The distinguishment, at sub-block 337, may be based on a difference between the respective response signals detected on the CAN bus. In the context of the electronic system 200 described above with reference to FIG. 3, distinguishing, at sub-block 337, between the plurality of remote devices/RIOCs 480A-1, 480A-2 may include analysing a component of the response signal which corresponds to a signal received at the second input DI4 of each remote RIOC 480A-1, 480A-2 to determine which RIOC 480A-1, 480A-2 is associated with the first primary evaporator 408A-1 and which RIOC 480A-1, 480A-2 is associated with the first secondary evaporator 408A-2. Specifically, the RIOC 480A-1 associated with the first primary evaporator 408A-1 may be identified as the remote device from which the response signal has a component corresponding to its second input DI4 being coupled to the first dedicated channel 462 and the RIOC 480A-2 associated with first secondary evaporator 408A-2 may be identified as the remote device from which the response signal has a component corresponding to its second input DI4 being coupled to ground. In this manner, the RIOCs associated with primary and secondary evaporators configured for heat exchange with the first climate-controlled zone 24A may be distinguished and identified. Metadata corresponding to the identity of each remote device may be stored in a memory (e.g., the non volatile memory) of the controller.

After the distinguishments have been made, at sub-block 337, the method moves on to assigning, at sub-block 338, a network address (e.g., source address) to each of the plurality of remotes device which provided the response signals on the CAN bus. The network addresses may be assigned, at sub-block 338, based on (e.g., using) the SAE J1939 protocol. Sub-block 338 may optionally comprise generating a status message. The status message may be provided on an HMI or an API of the electronic system or of the refrigeration system. In the context of the electronic system 200 described above with reference to FIG. 3, generation and provision of the status message may inform the installer or the user that the climate-controlled zone 24A has been configured as a multi-evaporator zone and optionally provide an indication of how many evaporators are included in the multi-evaporator zone.

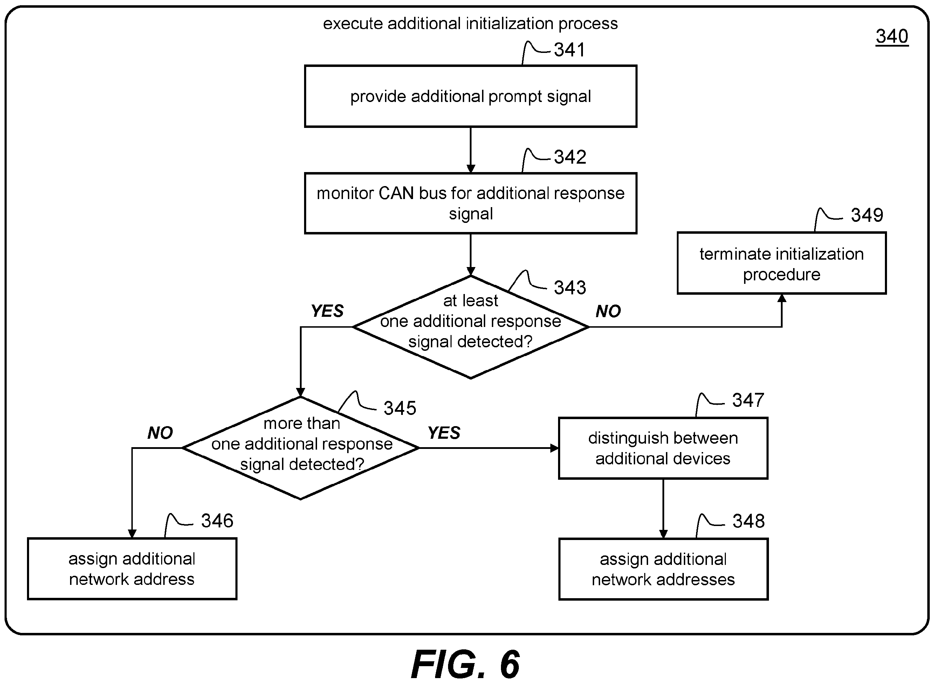

**FIG. 6** is a flowchart which shows the first additional initialization process represented by block 340 within FIG. 4 in detail.

The first additional initialization process comprises providing, at sub-block 341, an additional prompt signal on an additional dedicated channel (e.g., the second dedicated channel 464 described above with reference to FIG. 3). The additional prompt signal may be generally similar to the prompt signal described above with reference to sub-block 331 of FIG. 5. The additional prompt signal may be, for example, a digital output signal (e.g., a DC voltage corresponding to a HIGH digital state). The first additional initialization process also comprises monitoring, at sub-block 342, for one or more additional response signals on the CAN bus after the additional prompt signal has been provided on the additional dedicated channel and determining, at sub-block 343, whether at least one additional response signal from an additional remote device has been detected on the CAN bus. Detection of an additional response signal on the CAN bus from a remote device is indicative of the additional remote device(s) (e.g., a RIOC 480B-1, 480B-2 described above with reference to FIG. 3) having received the additional prompt signal via the additional dedicated channel at a first input of the additional remote device (e.g., the first input VSYS described above with reference to FIG. 3) and responding thereto by providing the additional response signal on the CAN bus. As a result, detection of an additional response signal on the CAN bus is indicative of the wiring between the additional remote device and the controller functioning correctly. Like the response signal described above with reference to FIG. 5, the additional response signal may comprise (e.g., encode or represent) a unique identifier associated with the additional remote device which provides the additional response signal on the CAN bus. Lack of detection of an additional response signal on the CAN bus after the additional prompt signal has been provided on the additional dedicated channel is indicative of the wiring between the additional remote device and the controller not functioning correctly. The additional response signal may comprise an indication of presence of a signal or an absence of a signal received at a second input of the additional remote device (e.g., the second input DI4 described above with reference to FIG. 3).

If it is determined, at sub-block 343, that an additional response signal has not been detected on the CAN bus from an additional remote device after the additional prompt signal was provided on the additional dedicated channel, the method 300 terminates, at block 349, performance of the initialization procedure and optionally generates a status message. The status message may be provided on an HMI or an API of the electronic system or of the refrigeration system. In the context of the electronic system 200 described above with reference to FIG. 3, generation and provision of the status message may inform the installer or the user that the no additional devices have been configured as part of the initialization of the refrigeration system and that the refrigeration system has therefore been configured as a single climate-controlled zone refrigeration system. The installer or the user may then either accept this configuration of the refrigeration system or restart the initialization procedure by providing an input to the HMI or the API as described above after having investigated the wiring between the controller and the additional device(s). For example, if the installer or the user is aware that the refrigeration system should be configured as a multi climate-controlled zone refrigeration system, termination, at sub-block 349, of the initialization procedure is indicative of the wiring between the controller and the additional remote devices being faulty.

Conversely, if it is determined, at sub-block 343, that an additional response signal has been detected on the CAN bus after the additional prompt signal was provided on the additional dedicated channel, the method 300 determines, at sub-block 345, whether a plurality of additional response signals from a corresponding plurality of additional remote devices have been detected on the CAN bus. By way of example, if additional response signals comprising different unique identifiers are detected on the CAN bus, the initialization process comprises determining, at sub-block 345, that a plurality of additional response signals from a corresponding plurality of additional remote devices have been detected on the CAN bus. Otherwise, the initialization process may determine, at sub-block 345, that a plurality of additional response signals from a corresponding plurality of additional remote devices have not been detected on the CAN bus.

If it is determined, at sub-block 345, that a plurality of additional response signals from a corresponding plurality of additional remote devices have not been detected on the CAN bus (i.e., that only one additional response signal has been received on the CAN bus from only one additional remote device), the method 300 assigns, at sub-block 346, a network address (e.g., source address) to the additional remote device which provided the additional response signal on the CAN bus. The network address may be assigned, at sub-block 346, based on (e.g., using) the SAE J1939 protocol. Sub-block 346 may optionally comprise generating a status message. The status message may be provided on an HMI or an API of the electronic system or of the refrigeration system. In the context of the electronic system 200 described above with reference to FIG. 3, generation and provision of the status message may inform the installer or the user that the second climate-controlled zone 24B has been configured as a single-evaporator zone.

If it is determined, at sub-block 345, that a plurality of additional response signals from a corresponding plurality of additional remote devices have been detected on the CAN bus, the method 300 distinguishes, at sub-block 347, between the plurality of additional remote devices. The distinguishment, at sub-block 347, may be based on a difference between the respective additional response signals detected on the CAN bus. In the context of the electronic system 200 described above with reference to FIG. 3, distinguishing, at sub-block 347, between the plurality of additional remote devices/RIOCs 480B-1, 480B-2 may include analysing a component of the additional response signal which corresponds to a signal received at the second input DI4 of each remote RIOC 480B-1, 480B-2 to determine which RIOC 480B-1, 480B-2 is associated with the second primary evaporator 408B-1 (e.g., a primary additional evaporator) and which RIOC 480B-1, 480B-2 is associated with the second secondary evaporator 408B-2 (e.g., a secondary additional evaporator). Specifically, the RIOC 480B-1 associated with the second primary evaporator 408B-1 may be identified as the additional remote device from which the additional response signal has a component corresponding to its second input DI4 being coupled to the second dedicated channel 464 and the RIOC 480B-2 associated with second secondary evaporator 408B-2 may be identified as the additional remote device from which the additional response signal has a component corresponding to its second input DI4 being coupled to ground. In this manner, the RIOCs associated with primary and secondary evaporators configured for heat exchange with the second climate-controlled zone 24B (e.g., an additional climate-controlled zone) may be distinguished and identified. Metadata corresponding to the identity of each additional remote device may be stored in a memory (e.g., the non volatile memory) of the controller.

After the distinguishments have been made, at sub-block 347, the first additional initialization process assigns, at sub-block 348, a network address (e.g., source address) to each of the plurality of additional remotes device which provided the additional response signals on the CAN bus. The network addresses may be assigned, at sub-block 348, based on (e.g., using) the SAE J1939 protocol. Sub-block 348 may optionally comprise generating a status message. The status message may be provided on an HMI or an API of the electronic system or of the refrigeration system. In the context of the electronic system 200 described above with reference to FIG. 3, generation and provision of the status message may inform the installer or the user that the second climate-controlled zone 24B has been configured as a multi-evaporator zone and optionally provide an indication of how many evaporators are included in the multi-evaporator zone.

The or each network address assigned during execution of the initialization process, at sub-blocks 336, 338, 346 and/or 348, may be stored in a non-volatile memory of the controller and/or the remote device. It may be that the network address is not changed until the initialization procedure is restarted by the installer or the user.

The second additional initialization process represented by block 340' is generally similar to the first additional process procedure represented by block 340. That is, the second additional initialization process comprises actions largely corresponding to the actions represented by sub-blocks 341, 342, 343, 345, 346, 347, 348 and 349 in FIG. 6. However, in the second additional initialization process, the additional prompt signal is provided on a second additional dedicated channel (e.g., the third dedicated channel 466 described above with reference to FIG. 3). Further, in the context of the electronic system 200 described above with reference to FIG. 3, distinguishing between the plurality of additional remote devices/RIOCs 480B-1, 480B-2 in the second additional initialization process may include analysing a component of the additional response signal which corresponds to a signal received at the second input DI4 of each remote RIOC 480C-1, 480C-2 to determine which RIOC 480C-1, 480C-2 is associated with the third primary evaporator 408C-1 (e.g., a further primary additional evaporator) and which RIOC 480C-1, 480B-C is associated with the third secondary evaporator 408C-2 (e.g., a further secondary additional evaporator).

Retuning now to FIG. 4, block 340" represents an nth additional initialization process. The nth additional initialization process is generally similar to the first additional process procedure represented by block 340 and the second additional process procedure represented by block 340'. In the context of refrigeration systems, the nth additional initialization process may be included within the method 300 to cater for the initialization of a refrigeration system comprising more than three climate-controlled zones with associated remote devices/evaporators. The present disclosure envisages that the method 300 may comprise any suitable number of initialization processes, including any number of additional initialization processes (e.g., as many initialization processes as there are or might be climate-controlled zones in the context of refrigeration systems).

If at least one network address has been assigned to a RIOC during performance, at block 310, of the initialization procedure, the method 300 includes proceeds to performing, at block 320, of the run procedure 320. In some examples, the method 300 may include waiting for a signal (e.g., from an HMI or an API) indicative of the installer or the user approving of the refrigeration system beginning to operate before proceeding to performing, at block 320, of the run procedure 320. In the context of refrigeration systems, the run procedure at block 320 may include the controller (e.g., the MAC 490) controlling a vapour-compression system (e.g., the vapour-compression system 400) based on, at least in part, one or more parameters received from the remote devices (e.g., the RIOCs) to which network addresses have been assigned during performance of the initialization procedure at block 310. As an example, the MAC 490 may receive from the RIOC(s) via the CAN bus 470 one or more parameters relating to physical conditions in or proximal to the evaporator(s) with which the RIOC(s) are associated. The physical conditions may for example include: a temperature of surrounding medium (e.g., air within the relevant climate-controlled zone); a level of frost on the evaporator(s); and/or a thermofluidic property of refrigerant being circulated through the evaporator(s). Otherwise, if no network addresses have been assigned during performance, at block 310, of the initialization procedure, the method 300 may include generating an alert. The alert may be provided on an HMI or an API of the electronic system or of the refrigeration system. Generation and provision of the alert may prompt the installer or the user to investigate a state of the wiring between the remote device(s) and the controller and take any remedial actions deemed appropriate. The installer or the user may then restart the initialization procedure by providing an input to the HMI or the API as described above.

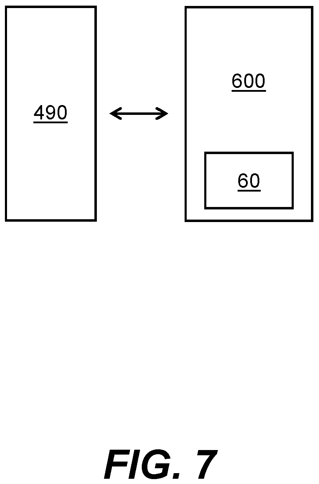

**FIG. 7** shows, highly schematically, a machine-readable medium 600 having stored thereon a computer program 60 comprising instructions which, when executed by the controller 490 provided to a transport refrigeration system 20 and/or a TRU 110 in accordance with the present disclosure (e.g., the transport refrigeration system 20 and/or the TRU 110 described above with reference to FIGs. 1-3), cause the controller 490 to carry out the method 300 described above with reference to FIGs. 4-6. The machine-readable medium 600 may form part of and/or the computer program 60 may be transferrable onto a memory of the controller 490 such that the controller 490 is able to perform the method 300 described above with reference to FIGs. 4-6 in conjunction with an HMI or an API without making use of any other external computing resources (e.g., any other processors or controllers, such as a separate computer).

Previously-considered systems and methods for initialising a refrigeration system include manually identifying remote devices (e.g., a remote IO controller) and the wiring between a controller (e.g., a main application controller). In the context of refrigeration systems, this may involve an installer or a user walking (e.g., repeatedly walking) between one or more climate-controlled zones and an area in which the controller is located. Systems and methods in accordance with the present disclosure facilitate simplification of installation for refrigeration systems by automatically identifying one or more remote evaporators, which is of particular benefit during the installation of a multi-temperature refrigeration systems. As a result, using systems and methods in accordance with the present disclosure may reduce a time taken to install/initialize/reinitialize a refrigeration system.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression circuits, it will be appreciated that the present disclosure has other possible applications in other technical areas.

## Claims

1. A method (300) comprising: performing, by a controller (490) of a refrigeration system (20), an initialization procedure (310) including executing an initialization process (330) which comprises:
providing a prompt signal on a dedicated channel (462);
monitoring a CAN bus (470) for a response signal from at least one remote device (480A-1, 480A-2); and
assigning a network address to the at least one remote device if a response signal from the remote device is detected on the CAN bus.

2. The method (300) of claim 1, wherein the initialization process (330) comprises generating an alert if a response signal from the at least one remote device (480A-1, 480A-2) on the CAN bus (470) is not detected.

3. The method (300) of claim 1 or claim 2, wherein the at least one remote device (480A-1, 480A-2) is associated with an evaporator (408A-1, 408A-2) configured for heat exchange with a climate-controlled zone (24, 24A).

4. The method (300) of any preceding claim, wherein the initialization process (330) comprises:
distinguishing between a plurality of remote devices (480A-1, 480A-2) if response signals from a plurality of remote devices are detected on the CAN bus (470) based on a difference between the respective response signals; and
assigning a network address to each remote device.

5. The method (300) of claim 4, wherein each of the plurality of remote devices (480A-1, 480A-2) is associated with a respective evaporator (408A-1, 408A-2) configured for heat exchange with the same climate-controlled zone (24, 24A).

6. The method (300) of claim 5, wherein distinguishing between the plurality of remote devices (480A-1, 480A-2) includes identifying one of the plurality of remote devices (480A-1) as being associated with a primary evaporator (408A-1) of the climate-controlled zone (24, 24A).

7. The method (300) of any preceding claim, wherein performing the initialization procedure (310) includes executing an additional initialization process (340, 340', 340") after executing the initialization process, and wherein the additional initialization process comprises:
providing an additional prompt signal on an additional dedicated channel (464, 466); and
monitoring the CAN bus (470) for an additional response signal from at least one additional remote device (480B-1, 480B-2, 480C-1, 480C-2).

8. The (300) method of claim 7,
wherein the additional initialization process (340, 340', 340") comprises:
assigning a network address to the at least one additional remote device (480B-1, 480B-2, 480C-1, 480C-2) if an additional response signal from the additional remote device is detected on the CAN bus (470).

9. The (300) method of claim 8, wherein the additional initialization process (340, 340', 340") comprises:
distinguishing between a plurality of additional remote devices (480B-1, 480B-2, 480C-1, 480C-2) if additional response signals from a plurality of additional remote devices are detected on the CAN bus (470) based on a difference between the respective additional response signals; and
assigning a network address to each additional remote device.

10. The (300) method of any of claims 7 to 9,
wherein the additional initialization process (340, 340', 340") comprises:
terminating performance of the initialization procedure if an additional response signal from an additional remote device (480B-1, 480B-2, 480C-1, 480C-2) is not detected on the CAN bus (470).

11. The (300) method of any preceding claim, comprising
performing, by the controller (490) of the refrigeration system (20), a run procedure (320) if at least one network address has been assigned during the initialization procedure (310), the run procedure including controlling the refrigeration system using the at least one network address.

12. A computer program (60) comprising instructions which, when the program is executed by a processor (490), cause the processor (490) to carry out the method (300) of any preceding claim.

13. A computer-readable medium (600) having stored thereon the computer program (60) of claim 12.

14. A refrigeration system (20) comprising a controller (490) configured to carry out a method (300) according to any claims 1 to 11.

## Amended claims

### Amended claims in accordance with Rule 137(2) EPC.

1. A method (300) comprising:
performing, by a controller (490) of a refrigeration system (20), an initialization procedure (310) including executing an initialization process (330) which comprises:
providing a prompt signal on a dedicated channel (462);
monitoring a CAN bus (470) for a response signal from at least one remote device (480A-1, 480A-2), the dedicated channel being separate from the CAN bus; and
assigning a network address to the at least one remote device if a response signal from the remote device is detected on the CAN bus.

2. The method (300) of claim 1, wherein the initialization process (330) comprises generating an alert if a response signal from the at least one remote device (480A-1, 480A-2) on the CAN bus (470) is not detected.

3. The method (300) of claim 1 or claim 2, wherein the at least one remote device (480A-1, 480A-2) is associated with an evaporator (408A-1, 408A-2) configured for heat exchange with a climate-controlled zone (24, 24A).

4. The method (300) of any preceding claim,
wherein the initialization process (330) comprises:
distinguishing between a plurality of remote devices (480A-1, 480A-2) if response signals from a plurality of remote devices are detected on the CAN bus (470) based on a difference between the respective response signals; and
assigning a network address to each remote device.

5. The method (300) of claim 4, wherein each of the plurality of remote devices (480A-1, 480A-2) is associated with a respective evaporator (408A-1, 408A-2) configured for heat exchange with the same climate-controlled zone (24, 24A).

6. The method (300) of claim 5, wherein distinguishing between the plurality of remote devices (480A-1, 480A-2) includes identifying one of the plurality of remote devices (480A-1) as being associated with a primary evaporator (408A-1) of the climate-controlled zone (24, 24A) and identifying another of the plurality of remote devices (480A-2) as being associated with a secondary evaporator (408A-2) of the climate-controlled zone.

7. The method (300) of any preceding claim, wherein performing the initialization procedure (310) includes executing an additional initialization process (340, 340', 340") after executing the initialization process, and wherein the additional initialization process comprises:
providing an additional prompt signal on an additional dedicated channel (464, 466); and
monitoring the CAN bus (470) for an additional response signal from at least one additional remote device (480B-1, 480B-2, 480C-1, 480C-2).

8. The (300) method of claim 7,
wherein the additional initialization process (340, 340', 340") comprises:
assigning a network address to the at least one additional remote device (480B-1, 480B-2, 480C-1, 480C-2) if an additional response signal from the additional remote device is detected on the CAN bus (470).

9. The (300) method of claim 8,
wherein the additional initialization process (340, 340', 340") comprises:
distinguishing between a plurality of additional remote devices (480B-1, 480B-2, 480C-1, 480C-2) if additional response signals from a plurality of additional remote devices are detected on the CAN bus (470) based on a difference between the respective additional response signals; and
assigning a network address to each additional remote device.

10. The (300) method of any of claims 7 to 9,
wherein the additional initialization process (340, 340', 340") comprises:
terminating performance of the initialization procedure if an additional response signal from an additional remote device (480B-1, 480B-2, 480C-1, 480C-2) is not detected on the CAN bus (470).

11. The (300) method of any preceding claim, comprising
performing, by the controller (490) of the refrigeration system (20), a run procedure (320) if at least one network address has been assigned during the initialization procedure (310), the run procedure including controlling the refrigeration system using the at least one network address.

12. A computer program (60) comprising instructions which, when the program is executed by a processor (490), cause the processor (490) to carry out the method (300) of any preceding claim.

13. A computer-readable medium (600) having stored thereon the computer program (60) of claim 12.

14. A refrigeration system (20) comprising a controller (490) configured to carry out a method (300) according to any claims 1 to 11.
